Europäisches Patentamt

European Patent Office

Office européen des brevets

(19)

(11) **EP 1 016 975 A2**

(12) **EUROPEAN PATENT APPLICATION**

(43) Date of publication:
**05.07.2000 Bulletin 2000/27**

(51) Int Cl.$^7$: **G06F 13/40**

(21) Application number: **99310619.4**

(22) Date of filing: **29.12.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **30.12.1998 US 223353**<br><br>(71) Applicant: **THE WHITAKER CORPORATION**<br>**Wilmington, Delaware 19808 (US)** | (72) Inventor: **Herrman, Henry Otto, Jr.**<br>**Elizabethtown, Pennsylvania 17022 (US)**<br><br>(74) Representative: **Warren, Keith Stanley et al**<br>**BARON & WARREN**<br>**18 South End**<br>**Kensington**<br>**London W8 5BU (GB)** |

(54) **Circuit to prevent energy drain from an active bus line**

(57) A voltage biasing circuit (7) has resistances (9, 10) in series and referenced to ground or earth, the resistances (9, 10) being connected to a voltage source (12) for charging the equivalent input capacitance of a device to the nominal voltage of an active bus line (2 or 3) prior to connection of the device to the active bus line (2 or 3), with first electrical connections (14) on the circuit (7) establishing connection with power and ground or earth prior to connection of the device with an active bus line (2 or 3), and a second electrical connection (13) at the junction of the resistances (9, 10), the second electrical connection (13) establishing connection of data communications signals of the device with the active bus line (2 or 3) after the device has been charged.

Fig. 2

**Description**

The invention relates to an apparatus, and further to a method, to prevent an energy drain from an active bus line due to an inherent input capacitance of an unpowered device being connected to the active bus line.

An active bus line of a data communications system transmits electronic data communications signals among the electrical devices that are operating on the active bus line. For example, one form of data communications system comprises a wired interconnection bus to which are connected such devices as, computer processing units, printers, keyboards, disk drives and other computer operated devices. The devices operate on the bus that provides communications connections consisting of multiple active signal lines. The bus has separate electrical connections though which electrical power and ground or earth electrical potential are supplied to the devices. Another form of a data communications system comprises telecommunications equipment for transmitting voice and data communications from one location to another.

The devices operating on the active bus lines communicate with one another using data communications circuitry. The terminology, data communications circuitry, describes the electrical circuitry by which the numerous devices communicate with one another. The data communications circuitry resides on circuit boards associated with the electrical devices.

A data communications system undergoes continuing change. Either a new device is added to the bus line of a system, or a defective device is removed from the bus line of the system, and is replaced. Adding and removing devices is safely accomplished by shutting down the system until removal and adding of devices has been completed. This means shutting down the bus line and interrupting all communications among the devices already operating on the bus. However, shutting down the system is not acceptable when it would halt data traffic that must run continuously without interruption, or that occurs at high densities. For example, a telecommunications system has a need to replace defective circuit boards without shutting down the system, and interrupting many voice transmissions and data transmissions. Techniques for assuring system operation, without shutting down, consist of multiple levels of communication between devices. For example, there are special signals specifically created only when a device is to be changed. There is no provision in other systems such as for the SCSI bus architecture. SCSI is described by an industry standard that is available to all users.

The latest version of this open architecture form of system operation is the SCSI LVDS System, which requires a specific hardware connection between the circuit board and a cable or backplane connection of the system. The hardware connection comprises, in part, an electrical connector having conducting pins of different lengths. The longest pins of the electrical connector are first to mate, when a device is plugged onto an active bus, and power and ground or earth electrical potential are immediately available. The shortest pins are last to mate, and enable bus communications with the circuit board. The use of pins that provide a sequence of mating simplifies the tasks required of computer software to accommodate detection and data switching that is activated pursuant to addition or removal and replacement of a circuit board relative to the system bus.

When a data communications system is changed, by the addition of, or replacement of a device, the device input must be charged up to the bus signal line voltage. The capacitance is minimized somewhat by specifying capacitance restrictions for the industry standard, SCSI, system specification. However, each of the unpowered circuit boards can be investigated, and determined to have an inherent input electrical impedance, with an input capacitance that will drain electrical energy from the bus to attain a charged condition. The input capacitance seeks to become charged by a detrimental energy drain upon being connected to an active bus line, leading to disruption of data signals on the bus line, and causing a signal error that is received by other devices operating on the active bus line.

Accordingly, when an unpowered device having an input capacitance is connected to an operating, active bus line of a data communications system, electrical energy required to charge the input capacitance of the device will be diverted from the bus line to cause a signal error to be generated on communications signals propagating on the active bus line. The signal error is propagated and received by other devices on the bus line, leading to faulty communications.

A need exists to compensate for the input capacitance of an unpowered device being connected to an active bus line, which, in turn, will avoid an energy drain on the bus line that would cause an error signal.

According to the invention, the inherent input capacitance of an unpowered data communications device is charged without the unpowered device causing an energy drain on an active bus signal line as the device is connected to the bus line.

Further, according to the invention, the inherent capacitance of an unpowered device is charged by an energy source other than the energy on an active bus signal line as the unpowered device is connected to the bus line, reducing the magnitude of a disturbance that would cause an energy drain from a bus signal line of a data communications system.

The invention pertains to apparatus, and further pertains to a method, for charging the inherent input capacitance of an unpowered device as the device is connected to an active bus, and thereby, avoid an energy drain from the multiple active bus signal lines.

A backplane architecture that utilizes an electrical connector having longer electrical pins and shorter electrical pins is readily adapted with the invention, wherein, the longer pins connect with active power and ground or earth electrical potential prior to connection of the shorter pins with an active data communications bus signal line. Using the longer pins to charge the inherent input capacitance of an unpowered device, thereby avoids an energy drain from the active bus line when the shorter pins connect the unpowered device to the active bus line.

An object of the invention is to provide a method of connecting an unpowered data communications device to be connected to an active bus, preventing an energy drain from the active bus signal lines charging the input capacitances.

Another object of the invention is to provide an apparatus and a method, which charges an inherent input capacitance of an unpowered data communications device, as the device is connected to an active bus line, to avoid an energy drain from the active bus line and the generation of a signal error.

These objects, as well as, other objects and advantages are intended to be covered by the invention without restriction in spirit and scope of the invention to the specific embodiments to be described.

Embodiments of the invention will now be described, by way of example, with reference to the accompanying drawings, according to which:

Figure 1 is a diagram of an electrical circuit showing an equivalent input capacitance of a device being connected to one active bus line of a differential pair of active bus lines;

Figure 2 is a diagram of a voltage bias circuit and its connections to a source of biasing voltage, to ground or earth electrical potential and to either one active bus line or a differential pair of active bus lines; and

Figure 3 is a connection and functional diagram of an LVDS Quad CMOS Differential Line Driver.

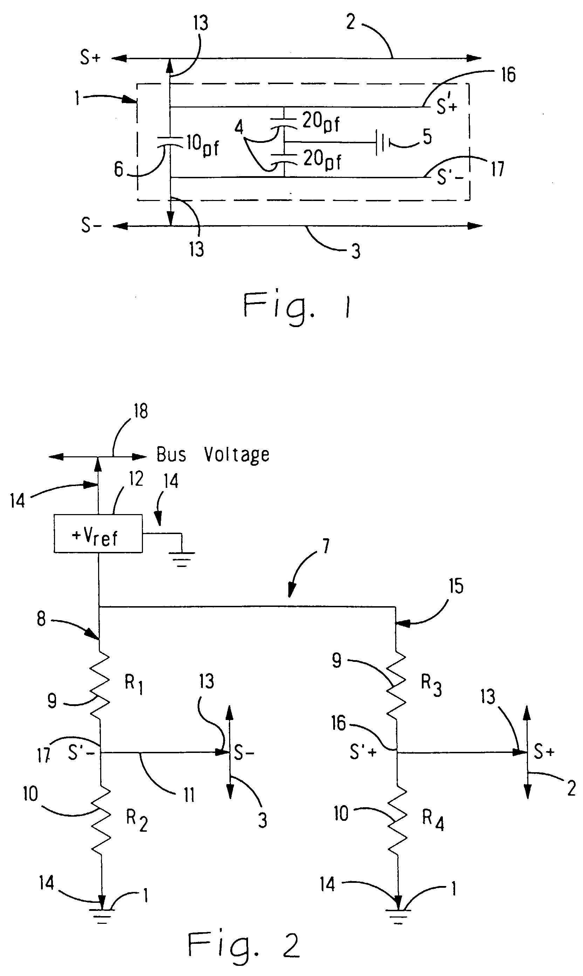

With reference to Fig. 1, an unpowered data communications device 1, is represented by an equivalent electrical circuit of its inherent input capacitance. The inherent input capacitance of such a device 1 can be determined by analysis and calculation, and represented by an equivalent circuit, such as that shown in Fig. 1. For purposes of describing the invention, the entire circuitry of the unpowered device 1, as a whole, is absent from Fig. 1, as Fig. 1 represents solely the inherent input capacitance of an unpowered device 1 to be connected to an active bus line 2, shown in Fig. 1 with an operating voltage S+. Further the device 1 can be connected to a differential pair of bus lines 2, 3 with respective operating voltages S+ and S-.

With reference to Fig. 1, such a device 1 has an input capacitance 4 of up to 20pf (picofarads) on each of its internal differential bus signal lines $S_+'$, $S_-'$, (16, 17) to ground or earth reference 5, and an input capacitance 6 of 10 pf between the bus lines 16, 17. Such a device 1 will have 0 Volts on each bus line 16, 17 just prior to being connected. The unpowered device 1, when connected to each active bus signal line 2, 3 will drain electrical energy from the bus line 2, 3 to charge the input capacitance until a nominal voltage of the bus line 2, 3, and 16, 17, respectively, is attained. The energy drain will cause a signal error in data communications signals propagating on the active bus line 2, 3. It is this phenomenon that the invention will prevent, by consequently reducing the magnitude of the energy drain and avoid generation of a signal error.

A known industry technical standard will now be described. The SCSI Termination for LVDS Systems provides for an electrical connector having multiple pins to connect such a device 1 to the differential bus lines 2, 3. Such an electrical connector is of known construction. Ideally the pins of the connector have identical nominal lengths to connect simultaneously to the differential bus lines 2, 3. However, due to variations in manufacturing, the pins vary in length, within dimensional tolerances, which causes the pins to contact the differential bus lines 2, 3 one at a time. Therefore, any one bus line 2, 3 can be required to charge an equivalent capacitance of 26.7 pf, which is the equivalent capacitance of 20pf in parallel with the combined sum of 10pf in series with 20 pf. Thus, as shown in Fig. 1, any one of the differential bus lines could be required to charge the equivalent of 26.7 pf to ground or earth. For example, the total amount of charge Q required to bring this capacitance to the nominal voltage is:

$$Q = (26.7pf)(1.25v) = 33.4pc \text{ (picocoulombs)}$$

For example, a communications bus specified by the industry standard, SCSI Termination for LVDS Systems, provides two differential voltage bus lines, such as the bus lines 2, 3. The SCSI termination for LVDS Systems provides the following bias voltages:

Common Mode Voltage: $1.125v \Leftarrow V_{CM} \Leftarrow 1.375v$ (volts)
Differential Voltage: $100mv \Leftarrow V_{DIFF} \Leftarrow 125mv$ (millivolts)and, the device drivers, LVDS, can provide a 350mv differential swing.

The specified LVDS bus bias from termination is obtained by calculation and is represented in the following table:

|  | Minimum | Maximum | Nominal |
|---|---|---|---|
| $V_{CM}$ | 1.125 | 1.375 | 1.250 |
| $V_{DIFF}$ | 0.100 | 0.125 | 0.113 |
| $S_+$ | 1.175 | 1.438 | 1.306 |

(continued)

|  | Minimum | Maximum | Nominal |
|---|---|---|---|
| S_ | 1.075 | 1.313 | 1.194 |

Referring to the table, above, the Nominal values in the last column of the table represent the midpoint voltage of a passive bus signal line, which is further varied by voltage signals, data, being propagated on the bus line.

The equivalent input capacitance of an unpowered device 1, also known as a cold device, connecting to one bus line is: 26.667 pf (rounded value of 26.7 pf).

The invention is understood by observing the effect of pre-biasing (charging) the cold signal lines to the nominal common mode voltage $V_{CM}$. First, note that the energy required to charge a cold device up to the nominal S+ voltage is:

$$Q = 26.7 \text{ pf } (1.306 \text{ volts}) = 34.9 \text{ pc.}$$

This removes enough energy to cause a disturbance of the bus signal line that could be mistaken for valid data. Depending on specific system characteristics, this is enough to induce a voltage pulse that can exceed 300 mv.

Now, any bus signal line can be as much as 56.5 millivolts (0.113 volts/2) above or below $V_{CM}$ in the quiescent state or $\pm$ 175 mv, (350mv/2), if data is actively being transmitted. There is no way to determine what the actual voltage will be prior to making contact between the cold device and the specific individual bus signal lines.

The energy required to bring the cold device signal line from $V_{CM}$ to the specific bus signal line voltage is:

$$Q = (26.7 \text{ pf})(\pm 56.5 \text{mv}) = \pm 1.51 \text{ pc. } (4.3\% \text{ of } 34.9 \text{ pc}) \text{ quiescent state.}$$
$$Q = (26.7 \text{ pf})(\pm 175 \text{mv}) = \pm 14.67 \text{ pc. } (13.4\% \text{ of } 34.9 \text{ pc}) \text{ active state.}$$

The energy drain has been reduced by the pre-biasing to a level small enough not to be mistaken for data in the quiescent state and not to cause a data error in the active state.

According to the invention, a voltage bias circuit 7, an embodiment of which is shown in Fig. 2, is contained in, and supplies charging energy to, the device 1, charging the equivalent input capacitance of the device 1 to the nominal voltage of the active bus line 2, 3. With reference to Fig. 2, the voltage bias circuit 7 comprises a branch circuit 8 having a first resistance 9 in series with a second resistance 10, having the respective resistance values R1 and R2. The branch circuit 8 has a plug in connection 11 with the active bus line 3.

The plug in connection 11 joins the device 1 signal lines (S'-, 17 and S'+, 16) to the bus signal lines 2 and 3 at the junction of the first resistance 9 and the second resistance 10. The first resistance 9 is connected to a voltage source 12 at voltage $V_{ref}$. The second resistance 10 connects the device 1 to ground or earth. The voltage bias circuit 7, as thus far described, is adapted to charge the equivalent input capacitance of the device 1 to the nominal voltage, which is the nominal common mode voltage $V_{CM}$, of a single bus line 2 or 3. This is accomplished prior to connection of the plug in connection 11 with the active bus line 2 or 3, so as to avoid an energy drain from the active bus line 2 or 3. The plug in connection 11 is diagrammatically shown in Fig. 2, and comprises a shorter pin 13 of a known electrical connector having multiple shorter pins 13 and multiple longer pins 14. The longer pins 14 are diagrammatically shown in Fig. 2 as establishing plug in electrical connections with ground or earth through the device 1, and with the voltage source 12. According to known procedures, the active device 1 is provided with the electrical connector, and as the active device 1 is connected to an active bus line 2 or 3, the longer pins 14 are first to mate pins, and establish plug in connections with power and ground or earth. The shorter pins 13 are last to mate pins, and establish plug in connections of data communications signals of the active device 1 and the active bus line 2 or 3. Thus, the first to mate, longer pins 14, will establish electrical connections of the bias circuit 7 with the device 1 to charge the equivalent input capacitance to the nominal voltage of the active bus line 2 or 3, prior to the last to mate, shorter pins 13 establishing plug in connection with the active bus line 2 or 3.

The voltage bias circuit 7 is further adapted to accommodate a communications bus specified by the industry standard, SCSI Termination for LVDS Systems, which provides two, differential pair bus lines 2, 3. With further reference to Fig. 2, the voltage bias circuit 7 is adapted for supplying charging energy to the device 1, charging the equivalent input capacitance of the device 1 to nominal voltages of two, differential pair, active bus lines 2, 3. Accordingly, the voltage bias circuit 7 comprises a further branch circuit 15 of similar construction and operation as that of the branch circuit 8. The further branch circuit 15 has a further first resistance 9 in series with a further second resistance 10, having the respective resistance values R3 and R4. The further branch circuit has a plug in connection 13 with a further active bus line 2. The plug in connection 13 is joined at the junction of the further first resistance 9 and the further second resistance 10. The further first resistance 9 is connected to the voltage source 12. The further second resistance 10 connects to ground or earth electrical potential through the device 1. A further longer pin 14 of the electrical connector, and further shorter pin 13 of the electrical connector are shown to connect the device 1 to the further active bus line 2, similarly as described with the branch circuit 8. For example, the voltage bias circuit 7 charges the equivalent input capacitance of the device 1 prior to connection of the device 1 to a differential pair of active bus lines 2, 3.

With reference to Fig. 2, the elements of the circuit 7 could have the following values:

$$V_{ref} = 5.000 \text{ volts}$$

$$R1 = R2 = 90000 \text{ Ohms}$$

$$\text{Bias Voltage} = 1.25o \text{ volts}$$

$$\text{Equivalent R} = 22500 \text{ Ohms}$$

$$T_c = RC = 0.600 \text{ usec}$$

The circuit 7 of Fig. 2 can be constructed with resistors or with semiconductor circuit elements, which provide the values of the elements of the circuit 7. The voltage $V_{ref}$, can be generated from varied sources, such as, a precision voltage reference circuit or a sensing amplifier in a sensing circuit on the bus line voltage. Thus, the invention comprises many embodiments and modifications.

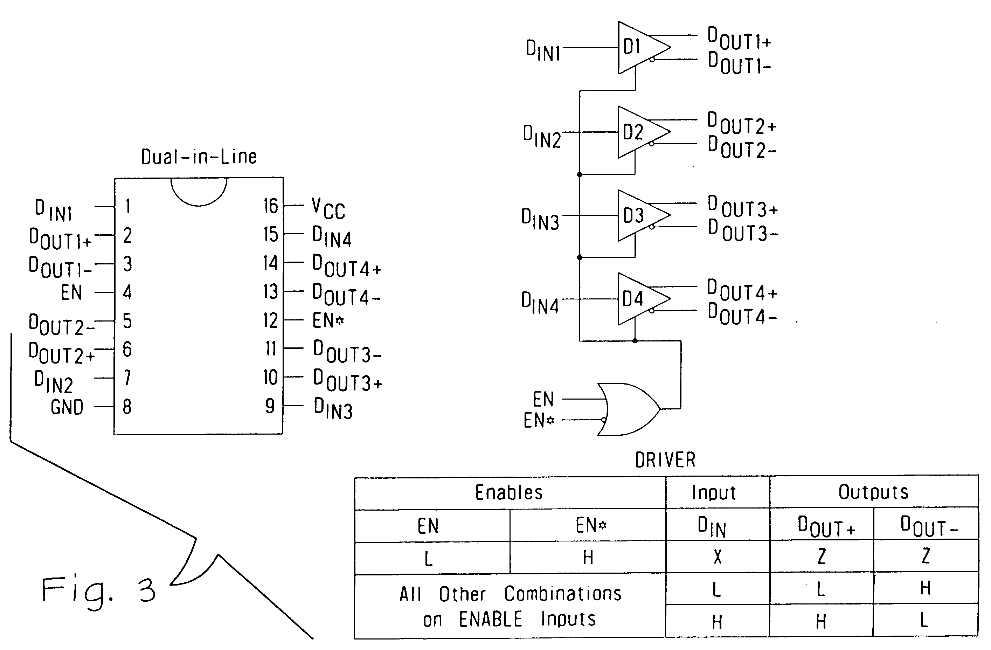

The precharging voltage provided by the resistors in this explanation, needs to be provided by high resistances, as shown, so as not to cause a problem on the bus, or that voltage source needs to be disconnected from the signal lines internal to the device 1 after the pre-charging is accomplished. This can be accomplished easily by proper circuit design within the silicon devices normally used in SCSI applications. For example, National Semiconductor, Inc. produces part number DS90C031 for SCSI bus applications, which is an LVDS Quad CMOS Differential Line Driver. The connection and functional diagram of the part number is shown in Fig. 3.

The invention can be implemented without specific resistors, for example, by providing an electrical equivalent to the resistances in the form of an internal reference source, additional CMOS devices (active devices in an integrated circuit) to the output stage and a small amount of logic, implemented according to the following functional table.

| Enables | | Input | Outputs | |
|---|---|---|---|---|
| EN | EN* | $D_{in}$ | $D_{out+}$ | $D_{out-}$ |
| L | H | X | Z | Z |
| H | L | X | PB | PB |

(continued)

| Enables | | Input | Outputs | |
|---|---|---|---|---|
| EN | EN* | $D_{in}$ | $D_{out+}$ | $D_{out-}$ |
| H | H | L | L | H |
| | | H | H | L |
| L | L | L | L | H |
| | | H | H | L |

Embodiments and modifications of the invention are intended to be covered by the scope of the appended claims.

**Claims**

1. A method of charging an equivalent input capacitance of a device (1) upon connection of the device (1) to an active bus line (2 or 3) of a data communications system, comprising the steps of:

   establishing a connection of a source of bias voltage (12) with the device (1) to charge said capacitance to the nominal voltage of the active bus line (2 or 3) prior to connection of data communications of the device (1) with the active bus line (2 or 3),
   connecting the device (1) with power and ground or earth prior to connection of the data communications of the device (1) with the active bus line (2 or 3), and
   connecting the data communications of the device (1) with the active bus line (2 or 3) after the device (1) has been charged to avoid an energy drain from the active bus line (2 or 3) upon connection of the device (1) to the active bus line (2 or 3).

2. A method as recited in claim 1, and further comprising the step of: connecting the device (1) with power and ground or earth using first to mate electrical pins (14) of an electrical connector.

3. A method as recited in claim 1 or 2, and further comprising the steps of: connecting the device (1) with the active bus line (2 or 3) using last to mate electrical pins (13) of an electrical connector.

4. A method as recited in claim 1, and further comprising the step of: providing connections of the device (1) with power and ground or earth on longer pins (14) of an electrical connector, and providing connections of the device (1) with the active bus line (2 or 3) on shorter pins (13) of the electrical connector, whereby, the electrical connector provides said longer pins (14) as first to mate pins, and the electrical connector provides said shorter pins (13) as last to mate pins.

5. A voltage biasing circuit (7) for charging an equivalent input capacitance of a device (1) upon connection of the device (1) to an active bus line (2 or 3) of a data communications system, comprising:

a first resistance (9) and a second resistance (10) in series,
the first resistance (9) being connected to a voltage source (12) for charging the equivalent input capacitance to the nominal voltage of the active bus line (2 or 3) prior to connection of the device (1) to an active bus line (2 or 3),
the second resistance (10) being referenced to ground or earth,
first electrical connections (14) on the circuit establishing connection with power and ground or earth prior to connection of the device (1) with an active bus line (2 or 3), and
a second electrical connection (13) at the junction of the first resistance (9) and the second resistance (10), the second electrical connection (13) establishing connection of data communications signals of the device (1) with the active bus line (2 or 3) after the device (1) has been charged.

6. A voltage biasing circuit (7) as recited in claim 5 wherein, the first electrical connections (14) comprise longer electrical pins (14) of an electrical connector, and the second electrical connection (13) comprises a shorter electrical pin (13) of the electrical connector, the connector connects the device (1) with the active bus line (2 or 3), and the shorter electrical pin (13) comprises a last to mate pin of the connector, whereby the second electrical connection is established after the device (1) has been charged.

7. A voltage bias circuit (7) as recited in claim 5 or 6 wherein, the resistances (9,10) comprise an equivalent comprising active devices in an integrated circuit.

8. A voltage biasing circuit (7), comprising: resistances (9,10) in series and referenced to ground, the resistances (9,10) being connected to a voltage source (12) for charging the equivalent input capacitance of a device (1) to the nominal voltage of an active bus line (2 or 3) prior to connection of the device (1) to the active bus line (2 or 3), first electrical connections (14) on the circuit establishing connection with power and ground prior to connection of the device (1) with an active bus line (2 or 3), and a second electrical connection (13) at the junction of the resistances (9,10), the second electrical connection (13) establishing connection of data communications signals of the device (1) with the active bus line (2 or 3) after the device (1) has been charged.

9. A voltage biasing circuit as recited in claim 8 wherein, the first electrical connections (14) comprise longer electrical pins (14) of an electrical connector, and the second electrical connection (13) comprises a shorter electrical contact (13) of the electrical connector, whereby the longer electrical (14) pins are first to mate pins, and the shorter electrical contact (13) comprises a last to mate contact.

Fig. 1

Fig. 2

EP 1 016 975 A2

Dual-in-Line

$D_{IN1}$ — 1    16 — $V_{CC}$
$D_{OUT1+}$ — 2    15 — $D_{IN4}$
$D_{OUT1-}$ — 3    14 — $D_{OUT4+}$
EN — 4    13 — $D_{OUT4-}$
$D_{OUT2-}$ — 5    12 — EN*
$D_{OUT2+}$ — 6    11 — $D_{OUT3-}$
$D_{IN2}$ — 7    10 — $D_{OUT3+}$
GND — 8    9 — $D_{IN3}$

Fig. 3

$D_{IN1}$ — D1 — $D_{OUT1+}$ / $D_{OUT1-}$
$D_{IN2}$ — D2 — $D_{OUT2+}$ / $D_{OUT2-}$
$D_{IN3}$ — D3 — $D_{OUT3+}$ / $D_{OUT3-}$
$D_{IN4}$ — D4 — $D_{OUT4+}$ / $D_{OUT4-}$

EN
EN*

DRIVER

| Enables | | Input | Outputs | |
|---|---|---|---|---|
| EN | EN* | $D_{IN}$ | $D_{OUT+}$ | $D_{OUT-}$ |
| L | H | X | Z | Z |
| All Other Combinations on ENABLE Inputs | | L | L | H |
| | | H | H | L |